# EUROPÄISCHE PATENTSCHRIFT

(11) **EP 2 164 153 B1**
(45) Veröffentlichungstag und Bekanntmachung des Hinweises auf die Patenterteilung: **11.03.2015**
(21) Anmeldenummer: 08016316.5
(22) Anmeldetag: 16.09.2008
(51) Int. Cl.: H01H 9/02, H02K 5/22, H02K 11/00, H01H 1/36, H01H 19/11, H01H 19/14

(54) **Klemmenkasten zum elektrischen Anschluss an einen Elektromotor**
Clamp cabinet for electrically connecting to an electric motor
Coffret à bornes destiné au raccordement électrique sur un moteur électrique

(43) Veröffentlichungstag der Anmeldung: 17.03.2010
(73) Patentinhaber: Grundfos Management A/S, 8850 Bjerringbro (DK)
(72) Erfinder: Ellegaard, Jorgen, 8680 Ry (DK)
(74) Vertreter: Hemmer, Arnd

(56) Entgegenhaltungen:
- WO-A-2004/104720
- WO-A-2005/028834
- DE-A1- 4 300 701
- DE-A1-102005 014 770
- DE-A1-102006 023 593
- DE-A1-102006 059 725
- DE-A1-102007 034 110
- DE-C1- 4 216 101
- DE-U1-202007 009 347
- US-A- 4 160 885
- US-A- 5 483 029
- US-A1- 2006 209 518
- US-B1- 6 317 332

## Beschreibung

Die Erfindung betrifft einen Klemmenkasten mit den im Oberbegriff des Anspruchs 1 angegebenen Merkmalen sowie ein Pumpenaggregat gemäß dem Oberbegriff des Anspruchs 14.

WO 2005/028834 A1 beschreibt eine elektrische Stelleinrichtung, insbesondere zum Einstellen der Drosselklappe eines Verbrennungsmotors. Die Stelleinrichtung weist elektrische Anschlusskontakte für den Stellmotor sowie elektrische Anschlüsse für ein Potentiometer zur Erfassung der Stellposition der Drosselklappe auf. Hierzu sind in einem Anschlussgehäuse Leiterbahnen vorgesehen, welche mit den Schleiferbahnen des Potentiometers kontaktierbar sind. Die Leiterbahnen sind als metallische Streifen in das Gehäuse eingelegt und enden in Anschlusskontakten bzw. Pins eines Anschlusssteckers, über welchen die ganze Stellvorrichtung elektrisch kontaktierbar ist.

Die im Gehäuse angeordneten Leiterbahnen sind zur Kontaktierung eines Potentiometers vorgesehen, d.h. es wird ein Potentiometer als Gesamtbauteil eingesetzt und dann mit den Enden der Leiterbahnen kontaktiert. Ein Bedienschalter ist bei dieser Stellvorrichtung nicht vorgesehen.

US 5,483,029 offenbart einen Elektromotor mit einem Anschlusskasten, in welchem ein Schalter vorgesehen ist, welcher dazu dient, die Motorwicklungen von der Stromversorgung trennen zu können. Dazu sind in dem Anschlusskasten Schaltkontakte angeordnet, welche über Klemmen mit Anschlussdrähten verbunden sind, welche zu den Motorwicklungen führen. Ferner sind Schaltkontakte vorgesehen, welche entsprechend mit einer elektrischen Anschlussleitung über Klemmen verbunden sind. Zwischen den Schaltkontakten ist ein bewegliches Schaltelement mit beweglichen Schaltkontakten vorgesehen. Nachteilig bei dieser Anordnung ist, dass der Schalter mit den elektrischen Bauteilen über Klemmen verbunden werden muss, was zum einen zu einer aufwendigen Montage führt und zum anderen zu einer unzuverlässigen Kontaktierung führen kann.

US 4,160,885 offenbart einen elektrischen Schalter mit einem Schaltergehäuse, wobei in diesem Schaltergehäuse elektrische Leiter und Schaltkontakte eingegossen sind. Für den Fall, dass ein solcher Schalter in einem Klemmenkasten eines Elektromotors Verwendung finden sollte, ist es jedoch erforderlich, die elektrischen Anschlüsse dieses Schalters wiederum mit den elektrischen Anschlüssen oder Bauteilen im Inneren des Klemmenkastens zu kontaktieren, woraus wiederum eine aufwendigere Montage und die Gefahr von Fehlern bei der Kontaktierung resultiert.

Zum Anschluss und zur Steuerung von Elektromotoren, insbesondere von Umwälzpumpen, sind Klemmenkästen bekannt, welche elektrisch an einen Elektromotor angeschlossen werden. Es ist ferner bekannt, am Klemmenkasten einen Bedienschalter, beispielsweise zur Wahl einer Drehzahl des Elektromotors, vorzusehen. Üblicherweise ist der Schalter auf einer Platine des Klemmenkastens angeordnet und mechanisch mit Bedienelementen an der Außenwand des Klemmenkastens verbunden. Dies erordert eine relativ aufwendige Montage.

Es ist Aufgabe der Erfindung, einen verbesserten Klemmenkasten mit einem Bedienschalter zu schaffen, welcher einfacher und kostengünstiger gefertigt werden kann und dabei eine zuverlässigere Kontaktierung elektrischer Bauteile in seinem Inneren ermöglicht.

Diese Aufgabe wird durch einen Klemmenkasten mit den in Anspruch 1 angegebenen Merkmalen sowie durch ein Pumpenaggregat mit den in Anspruch 13 angegebenen Merkmalen gelöst. Bevorzugte Ausführungsformen ergeben sich aus den Unteransprüchen sowie der Beschreibung und der Zeichnung.

Der erfindungsgemäße Klemmenkasten ist zum elektrischen Anschluss an einen Elektromotor, insbesondere einer Umwälzpumpe, vorgesehen. Erfindungsgemäß weist der Klemmenkasten zumindest einen als Kunststoffgussteil ausgebildeten Gehäuseteil und einen Bedienschalter auf, wobei der Bedienschalter an dem Gehäuseteil angeordnet ist und zumindest ein feststehender elektrischer Schaltkontakt des Bedienschalters in den Gehäuseteil eingegossen ist. Auf diese Weise ist es möglich, einen Teil des Bedienschalters durch den Gehäuseteil des Klemmenkastens zu bilden. Damit ist es nicht erforderlich, den Schalter als separates Bauteil auf einer Leiterplatte zu montieren. Entsprechend kann auf eine aufwendige, beispielsweise mechanische, Verbindung von am Gehäuse des Klemmenkastens angeordneten Bedienelementen und dem Schalter auf einer Leiterplatte verzichtet werden. Ferner ist die Fertigung des Gehäuseteils besonders einfach. So wird durch das Eingießen des elektrischen Schaltkontakts in den Gehäuseteil dieser direkt fixiert.

Vorzugsweise weist bei dem Klemmenkasten der Bedienschalter mehrere feststehende Schaltkontakte auf. So ausgestaltet kann der Bedienschalter mehr als zwei Schaltstellungen einnehmen.

Der Bedienschalter weist einen beweglichen Teil auf, welcher einen beweglichen Schaltkontakt des Bedienschalters umfasst. Der bewegliche Kontakt des Bedienschalters kann dann in elektrisch leitende Verbindung mit dem feststehenden elektrischen Schaltkontakt treten. Besonders bevorzugt weist der bewegliche Teil des Bedienschalters zwei bewegliche Schaltkontakte auf, die miteinander leitend verbunden sind, und welche derart an dem beweglichen Teil des Bedienschalters angeordnet sind, dass zwei der feststehenden elektrischen Schaltkontakte mit den beiden beweglichen elektrischen Schaltkontakten in elektrisch leitende Verbindung treten können. Somit werden durch den beweglichen Teil des Bedienschalters zwei der feststehenden elektrischen Schaltkontakte des Gehäuseteils leitend miteinander verbunden. In dieser Ausgestaltung kann der Bedienschalter als Umschalter ausgebildet werden, indem je nach Stellung des beweglichen Teils des Beschalter ausgebildet werden, indem je nach Stellung des beweglichen Teils des Bedienschalters unterschiedliche Paare von feststehenden eiektrischen Schaltkontakten leitend miteinander verbunden sind.

Zweckmäßigerweise ist bei dem Klemmenkasten am Bedienschalter ein Federelement angeordnet, welches den beweglichen Teil des Bedienschalters in Richtung auf den Gehauseteil kraftbeaufschlagt. Somit wird der bewegliche Teil des Bedienschalters am Gehäuse und damit nahe den feststehenden elektrischen Schaltkontakten gehalten, sodass die beweglichen Schaltkontakte des beweglichen Teils des Bedienschalters bei entsprechender Schattstellung mit den feststehenden Schaltkontakten des Bedienschalters in leitende Verbindung treten.

Weiter bevorzugt ist der bewegliche Teil des Bedienschalters über eine Rastverbindung beweglich mit dem Gehäuseteil verbunden. Auf diese Weise kann der Klemmenkasten bei der Fertigung besonders einfach montiert werden, da der bewegliche Teil des Bedienschalters zur Montage lediglich in eine am Gehäuse vorgesehene Aufnahme eingesetzt werden muss. Ober die rastende Verbindung wird der Bedienschalter danach in dieser Position drehbeweglich gehalten.

In bevorzugter Ausgestaltung ist bei dem Klemmenkasten der Bedienschalter ein Drehschalter. Insbesondere ist der bewegliche Teil des Drehschalters ein zylindrischer Drehkörper. Vorzugsweise sind an einer gehäuseseitigen Stirnwand des Drehschalters diametral um die zentrale Dreh- bzw. Längsachse des Drehkörpers zwei gemeinsam mit dem Drehkörper drehbewegliche Schaltkontakte angeordnet, die mit feststehenden, am Gehäuseteil angeordneten elektrischen Schaltkontakten leitend in Kontakt treten können. Dazu sind die feststehenden elektrischen Schaltkontakte vorzugsweise derart um die Drehachse des Drehkörpers herum am Gehäuseteil verteilt, dass sich ein erster feststehender Schaltkontakt umfänglich um etwa den halben Umfang um die Drehachse erstreckt. Die übrigen Schaltkontakte sind dabei mit gleichem Abstand voneinander und mit gleichem Abstand von der Drehachse um den verbleibenden Umfang um die Drehachse verteilt. Diese übrigen Schaltkontakte erstrecken sich dabei um deutlich kleinere Teile des Umfangs als der der erste Schaltkontakt. Somit schleift der erste bewegliche Schaltkontakte bei Drehung des Drehkörpers auf dem ersten feststehenden elektrischen Schaltkontakt, während der zweite bewegliche Schaltkontakt mit jedem der übrigen feststehenden Schaltkontakte durch Drehung des Drehkörpers leitend verbindbar ist. Ferner bevorzugt ist bei dem Klemmenkasten der Bedienschalter ein Drehzahlwahlschalter des mit dem Klemmenkasten verbundenen Elektromotors.

In einer bevorzugten Ausgestaltung ist der Klemmenkasten derart ausgestaltet, dass der Bedienschalter ein Anzeigeelement aufweist. Beispielsweise ist das Anzeigelement zur Anzeige des Betriebszustandes des Elektromotors vorgesehen.

Besonders bevorzugt ist das Anzeigeelement eine Leuchtanzeige. Vorteilhafterweise weist in dieser Ausgestaltung der Klemmenkasten ein Leuchtmittel und einen Lichtleiter auf. Dabei sind Leuchtmittel und Leuchtanzeige mittels des Lichtleiters lichtleitend miteinander verbunden. Auf diese Weise kann das Leuchtmittel zur Ausleuchtung der Leuchtanzeige von der Leuchtanzeige beabstandet sein. Idealerweise ist das Leuchtmittel eine Leuchtdiode, welche auf einer Leiterplatte, insbesondere der weiter unten beschriebenen Leiterplatte, angeordnet ist. So kann die Leiterplatte mit dem Leuchtmittel im Inneren des Klemmenkastens weiter beabstandet von dessen Gehäusewandung angeordnet werden.

Vorzugsweise bildet dabei ein Teil des Bedienschalters, insbesondere die Welle eines Drehschalters, zumindest einen Teil des Lichtleiters, Bildet die Welle eines Drehschalters zumindest einen Teil des Leichtleiters, so verschiebt sich der Lichtpfad durch den Lichtleiter auch bei einer Änderung der Drehstellung des Drehschalters nicht. Entsprechend bleibt die Ausleuchtung der Leuchtanzeige von einer Betätigung des Drehschalters unbeeinflusst. Bevorzugt ist der Lichtleiter oder eines seiner Teile als transparentes lichtleitendes Kunststoffelement ausgebildet. Alternativ kann der Lichtleiter als einfache axiale Öffnung, d.h. eine axiale Durchführung, ausgebildet sein. So kann die Welle rohrförmig sein.

Der zumindest eine feststehende Schaltkontakt des Bedienschalters ist Teil eines vorzugsweise in den Gehäuseteil eingegossenen Leiterbahnsystems. In dieser Ausgestaltung kann bei der Herstellung des Klemmenkastens auf einen zusätzlichen Fertigungsschritt, bei welchem der zumindest eine feststehende Schaltkontakt elektrisch kontaktiert werden muss, verzichtet werden.

Weiter bevorzugt weist das vorhergehend beschriebene Leiterbahnsystem zumindest eine der nachfolgenden Komponenten auf: einen elektrischen Steckkontaktbereich zum Anschluss des Klemmenkastens an den Elektromotor, einen elektrischen Steckkontaktbereich zum Anschluss des Klemmenkastens an eine Spannungsquelle, einen elektrischen Kontakt zum Anschluss eines Kondensators des Klemmenkastens, zumindest einen elektrischen Kontakt zum Anschluss einer Leiterplatte des Klemmenkastens, ein Erdungselement. Insbesondere handelt es sich bei dem elektrischen Kontakt zum Anschluss einer Leiterplatte des Klemmenkastens um einen als Klemmelement ausgebildeten elektrischen Kontakt, wie er nachfolgend beschrieben ist. Idealerweise sind sämtliche elektrischen Verbindungen und Kontakte des Klemmenkastens in den Gehäuseteil bzw. das Gehäuse eingegossen. So kann auf eine aufwendige Verdrahtung oder zusätzliche Leiterplatten mit den erforderlichen elektrischen Verbindungen verzichtet werden.

Ferner bevorzugt sind bei dem Klemmenkasten einzelne Leiterbahnen des Leiterbahnsystems vor dem Eingießen in den Gehäuseteil isolierend miteinander verbunden. Auf diese Weise lassen sich die Leiterbahnen bei der Herstellung des Klemmenkastens äußerst einfach in den Gehäuseteil eingießen. So können die Leiterbahnen durch die isolierende Verbindung, insbesondere dann, wenn sie als starre Verbindung ausgeführt ist, als einstückiges bzw, einteilig handhabbares Modul in den Gehäuseteil eingegossen werden. Insbesondere müssen die Leiterbahnen bei der Herstellung des Klemmenkastens vor dem Gießen des Gehäuseteils nicht einzeln in dem Werkzeug ausgerichtet bzw. positioniert werden. Vielmehr muss lediglich das einstückig bzw. einteilig handhabbare Modul in das Werkzeug eingelegt bzw. ausgerichtet werden.

Der Klemmenkasten umfasst ferner bevorzugt zumindest eine Wandung und zumindest eine Leiterplatte. Vorzugsweise handelt es sich dabei um die zuvor beschriebene Leiterplatte, an welcher das Leuchtmittel angeordnet ist. Vorzugsweise bildet dabei die Wandung einen Teil des Gehäuses des Klemmenkastens. Grundsätzlich kann die Wandung jedoch auch Teil eines in das Gehäuse eingebrachten Bauteils sein, bei welchem die Wandung zum Gehäuse insbesondere ortsfest angeordnet ist. Der Klemmenkasten weist an der Wandung zumindest einen elektrischen Kontakt zur Verbindung mit der Leiterplatte auf, welcher als Klemmelement zur lösbaren Klemmung der mit ihren Flachseiten senkrecht zu dieser Wandung orientierten Leiterplatte ausgebildet ist. Eine Leiterplatte im Sinne dieser Erfindung kann dabei elektrische oder elektronische Bauteile, beispielsweise zur Steuerung und/oder zur Überwachung des Elektromotors tragen. Mit dem als Klemmelement ausgebildeten elektrischen Kontakt ist die Leiterplatte besonders einfach im erfindungsgemäßen Klemmenkasten montierbar. Zudem ist die Leiterplatte gleichzeitig mit der Montage und daher besonders einfach elektrisch kontaktierbar. Auf diese Weise muss die Leiterplatte nicht in einem eigenen Montageschritt elektrisch kontaktiert werden. Vielmehr erfolgen elektrische Kontaktierung und mechanische Fixierung in einem einzigen Montageschritt, indem die Leiterplatte in das Klemmelement eingesetzt wird. Damit kann ein Montageschritt beim Aufbau des Klemmenkastens eingespart werden. Die lösbare Klemmung der Leiterplatte erlaubt ferner einen einfachen Austausch der Leiterplatte, da mit dem Lösen der Leiterplatte aus ihrer Klemmung auch ihre elektrische Kontaktierung einfach und reversibel unterbrochen wird. Bei dem zuvor genannten elektrischen Kontakt muss es sich nicht notwendigerweise um einen einzelnen elektrischen Kontakt handeln. Vielmehr kann der elektrische Kontakt im Sinne dieser Erfindung auch ein Kontaktfeld mit einer Vielzahl elektrischer Kontakte umfassen.

Bevorzugt ist die Leiterplatte nicht allein in einer mit ihren Flachseiten zur Wandung senkrechten Orientierung geklemmt, sondern auch mit ihren Flachseiten senkrecht zur Wandung orientiert in ihre Klemmposition schiebbar. Eine derartige Ausgestaltung vereinfacht deutlich die Montage des Klemmenkastens, da lediglich eine lineare, auf die Wandung zugerichtete Bewegung der Leiterplatte erforderlich ist. Ähnlich einfach gestaltet sich auch ein Lösen der Leiterplatte aus dem Klemmenkasten für einen Austausch der Leiterplatte. Besonders vorteilhaft ist eine solche Ausgestaltung bei Klemmenkostensystemen, wie sie nachfolgend beschrieben sind.

Vorzugsweise ist bei dem Klemmenkasten das Klemmelement als ein Paar federnder Klemmzungen ausgebildet, welche sich senkrecht von der Wandung forterstrecken, und mittels welchen die Leiterplatten an ihren Flachseiten geklemmt ist. Dabei ist unter einer sich senkrecht zur Wandung erstreckenden Klemmzunge zu verstehen, dass sie eine im Wesentlichen senkrecht zur Wandung orientierte federnde Lasche umfasst. Dabei können die Klemmzungen auch Vorsprünge, insbesondere an von der Wandung beabstandeten Abschnitten, an den federnden Laschen umfassen, die bei Klemmung einer Leiterplatte beispielsweise senkrecht auf die Flachseiten der Leiterplatte zu gerichtet sind. Vorzugsweise liegen die Klemmzungen einander gegenüber, sodass die Leiterplatte zwischen beiden Klemmzungen klemmbar ist. Vorteilhaft kann eine Leiterplatte in dieser Ausgestaltung senkrecht auf die Wandung zu zwischen die Klemmzungen in ihre Klemmposition bewegt werden, sodass lediglich eine lineare Bewegung erforderlich ist, um die Leiterplatte im Klemmenkasten anzuordnen.

Vorzugsweise weist bei dem Klemmenkasten die Leiterplatte auf zumindest einer ihre Flachseiten zumindest einen elektrischen Kontakt zu Verbindung mit dem Klemmelement auf, welcher nahe einer Seitenkante der Leiterplatte angeordnet ist. In einer solchen Ausgestaltung kann der zumindest eine elektrische Kontakt an der Leiterplatte als Teil einer auf einer Flachseite der Leiterplatte verlaufenden Leiterbahn ausgebildet sein. Diese Ausgestaltung ermöglicht eine besonders einfache Herstellung der Leiterplatte. Bevorzugt ist dabei der zumindest eine elektrische Kontakt als flächiger Kontakt ausgebildet. Korrespondierend dazu weist das Paar federnder Klemmzungen zumindest einen Kontaktbereich auf, der beispielsweise als plane Kontaktfläche oder als ein- oder zweiseitig gekrümmte Kontaktfläche, beispielsweise als Vorsprung, ausgestaltet sein kann. Auf diese Weise lässt sich ein Flächen-, Linien- oder Punktkontakt zur elektrischen Kontaktierung der Leiterplatte realisieren,

Bevorzugt ist bei dem Klemmenkasten das Klemmelement in das Gehäuse des Klemmenkastens eingegossen. Auf diese Weise kann der Klemmenkasten besonders einfach und kostengünstig gefertigt werden, da das Klemmelement nicht in einem eigens vorzusehenden Fertigungsschritt an dem Gehäuse positioniert und fixiert werden muss. Vielmehr können die Fertigung des Gehäuses und die Anordnung des Klemmelementes an dem Gehäuse in einem einzigen Fertigungsschritt erfolgen, in dem das Klemmelement bei der Fertigung des Gehäuses umgossen bzw, umspritzt wird. Dazu ist das Gehäuse zweckmäßigerweise aus Kunststoff und als Spritzgussteil gefertigt. Dabei ist es nicht erforderlich, dass das gesamte Gehäuse aus Kunststoff bzw. als Spritzgussteil gefertigt ist. Das Spritzgussteil kann dabei zum Beispiel lediglich einen Teil des Gehäuses des Klemmenkastens bilden, welcher den Bereich der Wandung umfasst, an dem das Klemmelement angeordnet ist. Das Klemmelement kann Teil eines in das Gehäuse eingegossenen Leiterbahnsystems sein, wie es oben beschrieben wurde.

Vorzugsweise weist der Klemmenkasten eine Haltevomchtung zur Klemmung eines Kondensators auf, welche aus einem elastischen Kunststoff ausgebildet ist. In dieser Ausgestaltung kann ein aus Kunststoff gegossener Klemmenkasten gemeinsam mit der Haltevorrichtung zur Klemmung eines Kondensators im Mehrkomponenten-Spritzgießen gefertigt sein, wobei das Gehäuse eine erste Komponente und die Haltevorrichtung eine zweite Komponente eines Mehrkomponenten-Spritzgussteils bildet. Allerdings ist es auch möglich, die Haltevorrichtung als separates Bauteil in eine entsprechende Aufnahme in den Klemmenkasten einzusetzen.

Weiter bevorzugt weist der Klemmenkasten zudem einen ersten Gehäuseteil und einen von diesem lösbaren Deckel mit einer zwischenliegenden Dichtung auf, wobei die Dichtung und die Haltevorrichtung aus demselben Material und gemeinsam mit dem ersten Gehäuseteil des Klemmenkastens als Mehrkomponenten-Spritzgussteil gebildet sind. In dieser Ausgestaltung können die Dichtung und die Haltevorrichtung gemeinsam in einem einzigen Fertigungsschritt ausgebildet werden. Die elastischen Elemente wie Haltevorrichtung und Dichtung sowie ggf. weitere Elemente können so mit dem Gehäuse des Klemmenkastens im Spritzguss verbunden werden. Entsprechend lässt sich gegenüber einer separaten Ausbildung von Dichtung und Haltevorrichtung ein Fertigungsschritt einsparen.

In einer bevorzugten Ausgestaltung weist der Klemmenkasten einen ersten Gehäuseteil und einen von diesem lösbaren Deckel auf, wobei die Leiterplatte an dem Deckel befestigt ist. Zweckmäßigerweise ist dabei die Wandung mit dem Klemmelement zur lösbaren Klemmung der Leiterplatte in dem ersten Gehäuseteil angeordnet. Mit einem derart ausgebildeten Gehäuse lässt sich der Klemmenkasten besonders einfach montieren. So können das Einsetzen sowie die elektrische Kontoktierung der Leiterplatte einfach durch Aufsetzen des Deckels auf den ersten Gehäuseteil erfolgen. Der Deckel ist dazu zweckmäßigerweise in Richtung der Flachseiten der Leiterplatte auf den ersten Gehäuseteil aufsetzbar.

Ferner bevorzugt weist der Klemmenkasten einen ersten Gehäuseteil und einen von diesem lösbaren Deckel auf, wobei an dem Deckel zumindest ein elektrischer Kontakt gemeinsam mit zumindest einer Leiterbahn angeordnet ist. Vorzugsweise ist der elektrische Kontakt gemeinsam mit der zumindest einen Leiterbahn in den Deckel eingegossen. In dieser vorteilhaften Weiterbildung der Erfindung kann der Kontakt des Deckels mit der Leiterplatte elektrisch in Kontakt treten. Alternativ können über den Kontakt gegebenenfalls auch Leiterbahnsysteme des ersten Gehäuseteils und des Deckels miteinander verbunden oder auch weitere Komponenten an den Klemmenkasten angeschlossen werden. Durch das Eingießen des elektrischen Kontaktes gemeinsam mit der zumindest einen Leiterbahn kann der Deckel mit dem Kontakt und der Leiterbahn in einem einzigen Fertigungsschritt gefertigt werden. Daher kann auf ein Fixieren des elektrischen Kontaktes am Deckel und ein nachträgliches Kontaktieren des Kontaktes in weiteren Fertigungsschritten verzichtet werden.

Besonders bevorzugt weist der Klemmenkasten einen ersten Gehäuseteil und einen von diesem lösbaren Deckel auf, wobei an dem Deckel zumindest eine Kabeldurchführung und/oder ein elektrischer Steckkontakt angeordnet ist. Mit der Kabeldurchführung und/oder dem elektrischen Steckkontakt des Deckels ist der Klemmenkasten mit einem externen Gerät elektrisch verbindbar, beispielsweise mit einem Steuergerät. Im Falle eines Klemmenkastens zum elektrischen Anschluss an einen Elektromotor einer Umwälzpumpe handelt es sich bei dem externen Gerät besonders bevorzugt um eine Austauschpumpe oder um ein weiteres Pumpenaggregat. Bei dem Deckel des Klemmenkastens kann es sich insbesondere um einen optionalen Deckel von zwei Deckeln eines Klemmenkastensystems handeln, wie er nachfolgend beschrieben ist.

Der Klemmenkasten ist bevorzugt derart ausgestaltet, dass das Klemmelement für die Leiterplatte an einem Gehäuseteil angeordnet ist, welcher zum Anschluss an den Elektromotor vorgesehen ist. Ein solcher motorseitiger Gehäuseteil des Klemmenkastens bildet ein Bodenteil des Gehäuses des Klemmenkastens. In einer solchen Ausgestaltung können vorteilhaft alle wesentlichen elektrischen Verbindungen im motorseitigen Gehäuseteil bzw, im Bodenteil gelegen sein, sodass das erforderliche Leiterbahnsystem lediglich auf den motorseitigen Gehäuseteil bzw. das Bodenteil des Gehäuses beschränkt bleiben kann.

Vorzugsweise weist bei dem Klemmkasten die Leiterplatte einen steuerbaren Schalter auf, welcher zumindest einen Steuerkontakt und zumindest einen Schaltkontakt aufweist. Dabei sind der Steuerkontakt mit einem elektrischen Steckkontaktbereich zum Anschluss des Elektromotors und der Schaltkontakt mit einem elektrischen Kontaktbereich des Klemmenkastens verbunden. Auf diese Weise kann ein elektrisches Signal an einen elektrischen Kontaktbereich des Klemmenkastens geleitet werden, welches beispielsweise anzeigt, ob der Elektromotor mit Strom versorgt wird. Beispielsweise kann über den elektrischen Kontaktbereich des Klemmenkastens ein Signal gegeben werden, wenn der Elektromotor keinen Strom erhält bzw. ausgefallen ist, Im Falle eines Klemmenkastens zum Anschluss an einen Elektromotor einer Umwälzpumpe kann insbesondere eine Austauschpumpe bzw. ein weiteres Pumpenaggregat an den elektrischen Kontaktbereich des Klemmenkastens angeschlossen sein, wobei das elektrische Signal die Austauschpumpe bzw. das weitere Pumpenaggregat zuschaltet oder betätigt. Dergestalt kann die Ausfallsicherheit eines Pumpenaggregates erhöht werden. Bei dem steuerbaren Schalter der Leiterplatte, z.B. ein Relais, kann es sich insbesondere um ein optionales Bauteil für eine Zusatzfunktion wie vorhergehend beschreiben handeln, welche an einer von zumindest zwei Leiterplatten eines Klemmenkastensystems vorgesehen ist, wie er nachfolgend beschrieben ist.

Der erfindungsgemäße Klemmenkasten ermöglicht den Aufbau eines modularen Klemmenkastensystems. Dabei umfasst das Klemmenkastensystem zumindest zwei unterschiedliche Leiterplatten, welche wahlweise in das zumindest eine Klemmelement des Klemmenkastens einsetzbar sind. Mit einem solchen modularen Klemmenkastensystem kann der Klemmenkasten unterschiedliche Steuer- und/oder Kontrollfunktionen aufweisen, welche durch die jeweilige im Klemmenkasten geklemmte Leiterplatte bestimmt werden. In einer solchen Ausgestaltung kann daher der Funktionsumfang des Klemmenkastens geändert werden, indem lediglich eine Leiterplatte des Klemmenkastens ausgetauscht wird, Beispielsweise kann eine der zumindest zwei Leiterplatten einen steuerbaren Schalter aufweisen, wie er oben beschrieben ist,

Ein Klemmenkastensystem umfasst alternativ oder in Gestalt des zuvor beschriebenen Klemmenkastensystems neben dem Klemmenkasten gemäß der vorhergehenden Beschreibung zwei unterschiedliche mit einem Gehäuseteil des Klemmenkastens wahlweise verbindbare Deckel. Diese Deckel können den Funktionsumfang des Klemmenkastens ändern, beispielsweise kann der Klemmenkasten je nach eingesetztem Deckel unterschiedliche oder eine unterschiedliche Anzahl von elektrischen Anschlusskontakten und/oder Kabeldurchführungen aufweisen, mit denen weitere Geräte angeschlossen werden können. Bevorzugt weist einer der beiden Deckel als optionaler Deckel einen elektrischen Anschlusskontakt auf, der mit einem steuerbaren Schalter an einer Leiterplatte im Inneren des Klemmenkastens verbindbar ist, wie er oben beschrieben wurde. Alternativ kann der optionale Deckel eine Durchführung für ein mit dem steuerbaren Schalter verbundenes Kabel aufweisen. Idealerweise umfasst das Klemmenkastensystem dabei zwei Leiterplatten, von denen eine Leiterplatte als optionale Leiterplatte den steuerbaren Schalter aufweist und in dem optionalen Deckel befestigt ist. In dieser Ausgestaltung kann ein externes Gerät über den optionalen Deckel an den Klemmenkasten angeschlossen und über den steuerbaren Schalter der optionalen Leiterplatte in Abhängigkeit vom Betriebszustand des Elektromotors ein Signal des steuerbaren Schalters empfangen. Dazu ist lediglich der optionale Deckel des Klemmenkastensystems mit der optionalen Leiterplatte in den Klemmenkasten einzusetzen.

Das erfindungsgemäße Pumpenaggregat ist vorzugsweise ein Umwälzpumpenaggregat. Dieses Pumpenaggregat weist gemäß der Erfindung einen Klemmenkasten oder ein Klemmenkastensystem wie vorhergehend beschrieben auf.

Die Erfindung wird nachfolgend anhand eines in der Zeichnung dargestellten Ausführungsbeispiels näher erläutert. Es zeigen:
- Fig. 1: schematisch ein erfindungsgemäßes Heizungsumwälzpumpenaggregat mit einem erfindungsgemäßen Klemmenkasten,
- Fig. 2: den erfindungsgemäßen Klemmenkasten gemäß Fig. 1 in einer perspektivischen Darstellung,
- Fig. 3A: ein Bodenteil des Gehäuses des Klemmenkastens gemäß Fig. 1 in einer perspektivischen Darstellung,
- Fig. 3B: einen Drehzahlwahlschalter des Bodenteils des Gehäuses gemäß Fig. 3A in einer Vergrößerung,

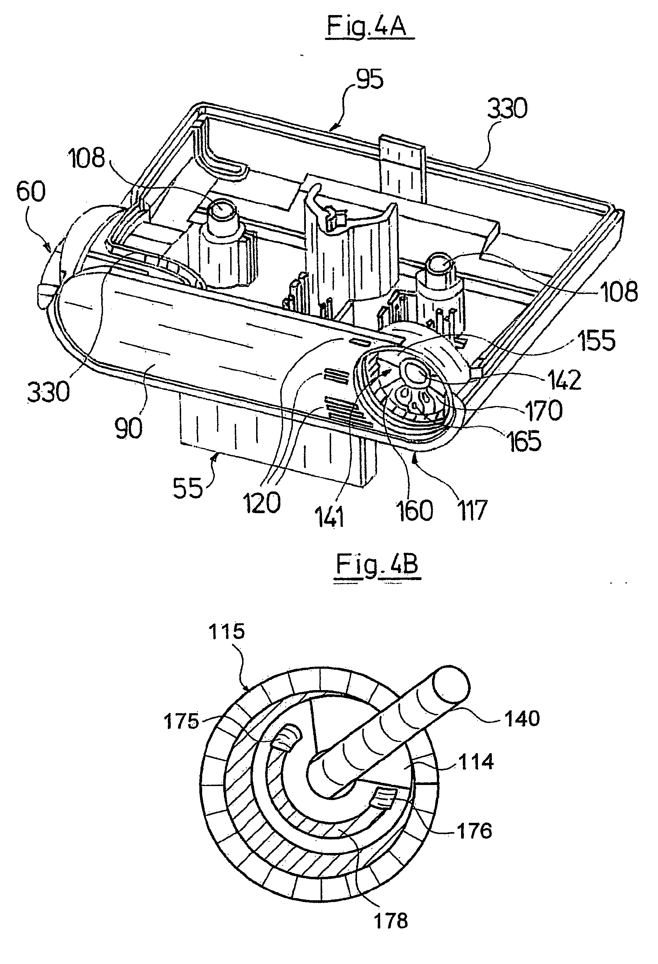

- Fig. 4A: das Bodenteil gemäß Fig. 3A in einer perspektivischen Darstellung,
- Fig. 4B: schematisch den beweglichen Teil des Drehzahlwahlschalters gemäß Fig. 3B,
- Fig. 5A: ein Leiterbahnsystem des Bodenteils gemäß Fig. 4A mit einem Schaltkontakt des Bedienschalters vor dem Vorvergießen,
- Fig. 5B: das Leiterbahnsystem gemäß Fig. 5A nach dem Vorvergießen,
- Fig. 6A: das Bodenteil des Gehäuses des Klemmenkastens gemäß Fig. 3A in einer perspektivischen Darstellung,
- Fig. 6B: ein Klemmelement des Bodenteils gemäß Fig. 3A zur Klemmung einer Leiterplatte mit einer Leiterplatte in einer Vergrößerung im Schnitt,
- Fig. 7: das Bodenteil gemäß Fig. 3A mit einem zweiten Deckel eines erfindungsgemäßen Klemmenkastensystems in einer perspektivischen Darstellung und
- Fig. 8: den zweiten Deckel gemäß Fig. 7 in einer perspektivischen Darstellung.

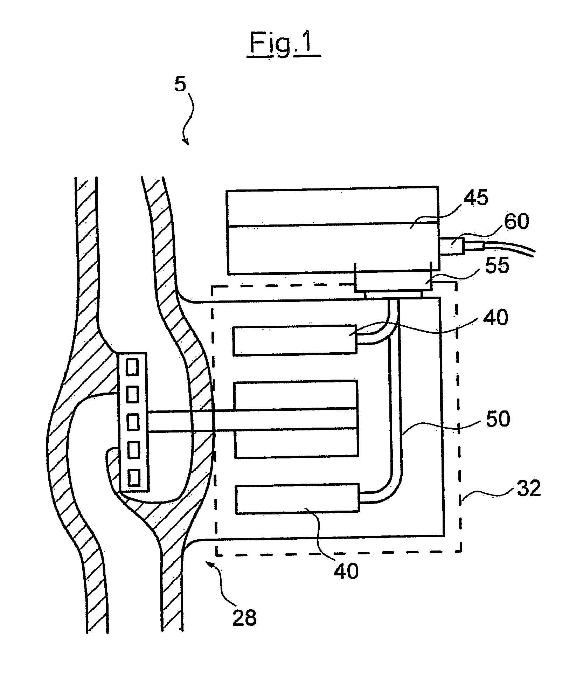

Bei dem in Fig. 1 dargestellten erfindungsgemäßen Pumpenaggregat handelt es sich um ein Heizungsumwälzpumpenaggregat 5 mit einem Elektromotor 32. Darüber hinaus weist der Elektromotor 32 einen Stator 40 auf, welcher von einem erfindungsgemäßen Klemmenkasten 45 mit elektrischer Energie gespeist wird. Zusätzlich übernimmt die Elektronik des Klemmenkastens 45 die Steuerung und Überwachung des Elektromotors 32. Dazu ist der Stator 40 des Elektromotors 32 über elektrische Leitungen 50 mit einem elektrischen Steckkontaktbereich 55 des Klemmekastens 45 verbunden. Der Klemmenkasten 45 ist zur Versorgung mit elektrischer Energie über einen elektrischen Steckkontaktbereich 60 an eine Spannungsquelle (in der Zeichnung nicht dargestellt) angeschlossen.

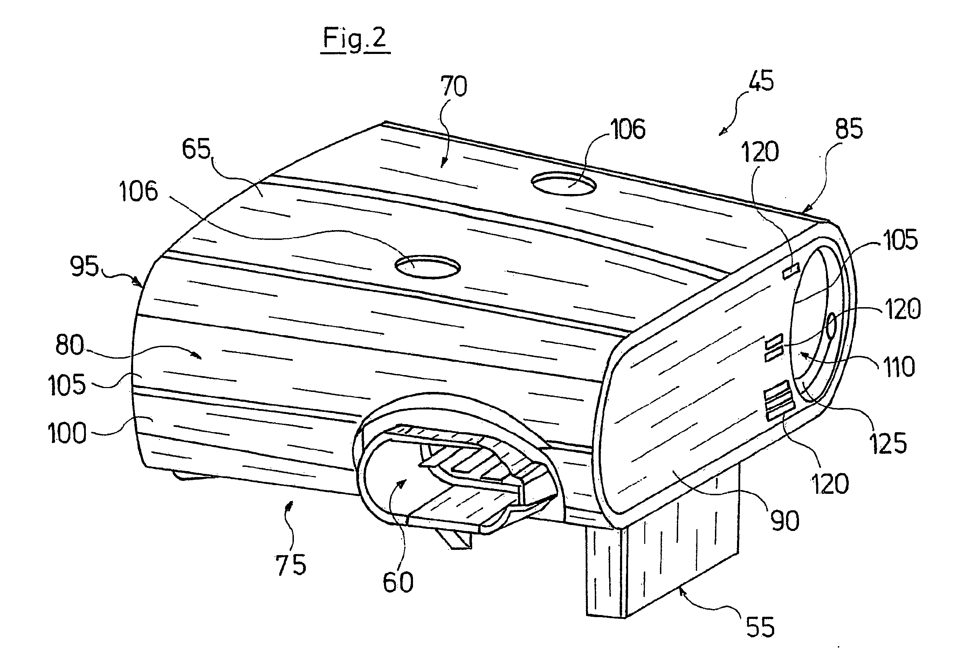

Der Klemmenkasten 45 weist wie in Fig. 2 gezeigt ein Gehäuse 65 auf, welches im Wesentlichen die Gestalt eines flachen Quaders besitzt. Die Flachseite 70 bildet dabei die vom Elektromotor 32 abgewandte Deckel- bzw. Oberseite des Gehäuses 65 und die Flachseite 75 die motorseitige, d.h. die dem Elektromotor 32 zugewandte Boden- bzw. Unterseite des Gehäuses 65. Die beiden kürzeren Schmalseiten 80, 85 des Gehäuses 65 sind nach außen gerundet und weisen die Gestalt eines entlang seiner Längsmittelebene geteilten Kreiszylindermantels auf. Die beiden längeren Schmalseiten des Gehäuses 65 sind plan ausgestaltet und bilden die Vorderseite 90 und die Rückseite 95 des Klemmenkastens 45.

Das Gehäuse 65 setzt sich aus einem motorseitigen Gehäuseteil in Form eines Bodenteils 100 und einem Deckel 105 zusammen, welche durch Schrauben (in der Zeichnung nicht dargestellt) lösbar miteinander verbunden sind. Der Deckel 105 weist an seiner Oberseite 70 zwei Durchführungen 106 auf, durch welche die Schrauben in Löcher 108 an der Unterseite 75 des Bodenteils 100 geschraubt werden können. Das Gehäuse 65 lässt sich dabei entlang der zur Ober- und Unterseite 70, 75 parallelen Längsmittelebene in Bodenteil 100 und Deckel 105 trennen. Die Vorderseite 90 ist dabei fest mit dem Bodenteil 100 verbunden. Der elektrische Steckkontaktbereich 55 zum Anschluss an den Elektromotor 32 ragt an der Unterseite 75 des Bodenteils 100 senkrecht nach außen. An einer kürzeren Schmalseite 80 des Bodenteils 100 ragt der elektrische Steckkontaktbereich 60 zum Anschluss an eine Spannungsquelle seitlich senkrecht nach außen.

Zur Auswahl der Drehzahl des Elektromotors 32 ist an der Vorderseite 90 des Klemmenkastens 45 ein Drehzahlwahlschalter in Form eines Drehschalters 110 angeordnet. Der Drehschalter 110 umfasst einen kreiszylindrisch ausgebildeten, mit einer Stirnfläche 114 zum Gehäuse 65 gewandten und drehbeweglich im Gehäuse 65 angeordneten Drehkörper 115. Der Drehkörper 115 ist dabei nahe einer kürzeren Schmalseite 85 des Gehäuses 65 angeordnet, sodass die kreisrunde Mantelfläche 116 des Drehkörpers 115 und die nach außen gekrümmte Schmalseite 85 des Gehäuses 65 konzentrisch zueinander gelegen sind. Auf diese Weise ist der Klemmenkasten 45 platzsparend ausgebildet. Der Drehkörper 115 befindet sich dazu in einer Aufnahme 117 in Gestalt einer kreiszylindrischen Ausnehmung an der Vorderseite 90 des Bodenteils 100.

Nahe dem Drehkörper 115 sind an der Vorderseite 90 des Gehäuses 65 Markierungen 120 aufgebracht, an welchen eine korrespondierende Markierung 125 des Drehkörpers 115 je nach Drehstellung des Drehkörpers 115 zur Anlage kommen kann. Mittels dieser Markierungen 120, 125 kann eine geeignete Drehstellung des Drehkörpers 115 zur Wahl der Drehzahl des Elektromotors 32 durch einen Benutzer abgelesen werden.

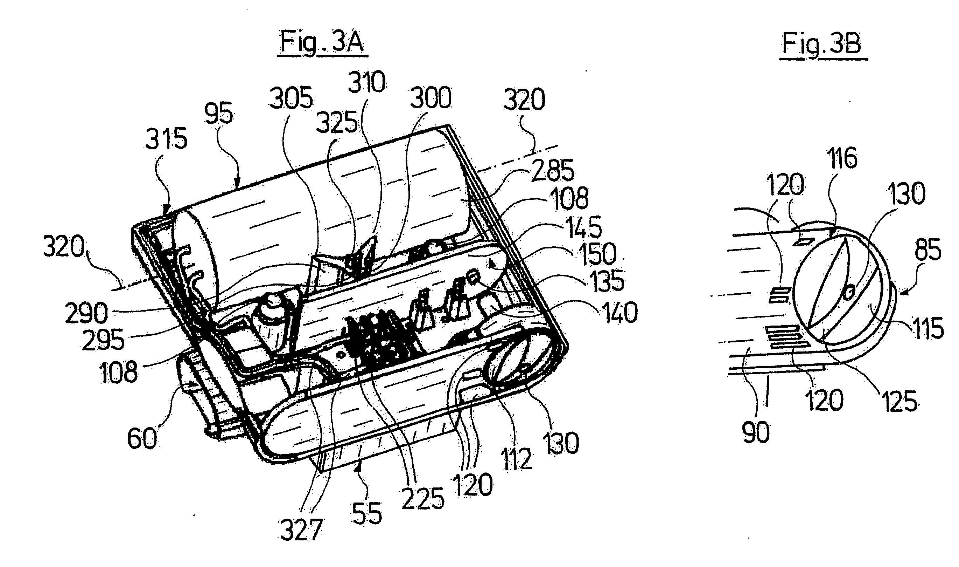

Der nähere Aufbau des Bodenteils 100 kann Fig. 3A entnommen werden. Im Zentrum des Drehkörpers 115 des Drehschalters 110 ist eine Leuchtanzeige 130 als Motorbetriebsanzeige ausgebildet, d.h. die Leuchtanzeige 130 leuchtet, wenn der Elektromotor 32 betrieben wird. Die Leuchtanzeige 130 wird dazu von einer Leuchtdiode 135 ausgeleuchtet. Dazu wird das von der Leuchtdiode 135 abgestrahlte Licht durch eine als Hohlschaft ausgebildete Welle 140 des Drehkörpers 115 geleitet, welche im Zentrum des Drehkörpers 115 angeordnet ist und sich mit ihrer Längsachse senkrecht zur Vorderseite 90 in das Innere des Gehöuses 65 fortstreckt. Somit wirkt der Hohlraum in der Welle 140 als Lichtleiter für das von der Leuchtdiode 135 abgestrahlte Licht. Im Inneren des Gehäuses 65 ist die Welle 140 an einer Stirnseite 141 der Aufnahme 117 in einer Durchführung 142 drehbar gehalten, sodass der Drehkörper in der Aufnahme 117 drehbar ist. Die Welle 140 endet dabei im Inneren des Gehäuses 65 nah der Leuchtdiode 135. An der nach außen gewandten Stirnseite des Drehkörpers 115 schließt die Welle 140 mit der Leuchtanzeige 130 bündig ab. Auf diese Weise ist die Leuchtdiode 135 mit der Leuchtanzeige 130 auf geradem Wege lichtleitend verbunden, sodass die Leuchtanzeige 130 von der Leuchtdiode 135 ausgeleuchtet wird. Alternativ zum dargestellten Ausführungsbeispiel kann in der Welle 140 das Licht auch durch einen festen transparenten Lichtleiter, beispielsweise aus Kunststoff, geleitet werden, der in dem Hohlschaft eingebettet ist oder selber die Welle bildet.

Das Licht wird von einer das Stirnende des Hohlschafts überdeckenden Streuscheibe der Leuchtanzeige 130 nach außen ausgestreut, wodurch die Leuchtanzeige 130 als leuchtend wahrnehmbar ist. Die Leuchtdiode 135 ist nahe der gehäuseeinwärts weisenden Öffnung der Welle 140 an einer Leiterplatte 145 angeordnet. Dabei befindet sich die Leuchtdiode 135 an der der Vorderseite 90 des Klemmenkastens 45 zugewandten Seite 150 der beiden Flachseiten 150, 152 der Leiterplatte 145. Die Leiterplatte 145 ist mit ihren Flachseiten 150, 152 senkrecht zur Unterseite 75 und parallel zur Vorderseite 90 in das Gehäuse 65 des Klemmenkastens 45 geklemmt (näheres zur Anordnung der Leiterplatte 145 ist weiter unten ausgeführt).

Neben dem beweglichen Drehkörper 115 weist der Drehschalter 110 feststehende elektrische Schaltkontakte 155, 160, 165, 170 auf. Die feststehenden elektrischen Schaltkontakte 155, 160, 165, 170 sind dabei an der Stirnseite 141 umfänglich um die Durchführung 142 für die Welle 140 herumgruppiert. Der feststehende Schaltkontakt 155 überdeckt dabei einen großen Winkelbereich um die Durchführung 142, welcher nahezu 180° ausmacht. Die Schaltkontakte 160, 165, 170 hingegen erstrecken sich lediglich über sehr schmale Winkelbereiche um die Durchführung 142 und sind voneinander gleich beabstandet und mit gleichem Abstand zur Durchführung 142 über den verbleibenden Umfang um die Durchführung 142 verteilt. Über den Drehschalter 110 kann nun eine von drei Drehzahlstufen des Elektromotors 32 gewählt werden, indem einer der schmalwirikligen feststehenden Kontakte 160, 165, 170 elektrisch leitend mit dem breitwinkligen feststehenden elektrischen Schaltkontakt 155 verbunden wird. Dazu weist der Drehkörper 115 an seiner Stirnfläche 114 zwei fest mit dem Drehkörper verbundene drehbewegliche Schaltkontakte 175, 176 auf. Die Schaltkontakte 175, 176 nehmen jeweils einen ebenso kleinen Winkelbereich um die Welle 140 ein wie die schmalwinkligen feststehenden elektrischen Schaltkontakte 160, 165, 170 und sind von der Welle 140 ähnlich weit beabstandet wie die feststehenden elektrischen Schaltkontakte 160, 165, 170 von der Durchführung 142. Die beiden Schaltkontakte 175, 176 sind dabei diametral entgegengesetzt um die Welle 140 angeordnet und über eine Leiterbahn 178 miteinander verbunden, die auf der Stirnfläche 114 des Drehkörpers 115 die Welle 140 umläuft und einen 180°-Winkel überstreicht. In dieser Ausbildung kann nun einer 176 der beiden mit dem Drehkörper 115 drehbeweglichen Schaltkontakte 175, 176 mit einem der schmalwinkligen, feststehenden elektrischen Schaltkontakte 160, 165, 170 in Kontakt treten. Der zweite bewegliche elektrische Schaltkontakt 175 schleift dabei über den breitwinkligen feststehenden elektrischen Schaltkontakt 155. Je nach Drehstellung des Drehkörpers 115 wird daher eine von drei elektrischen Schaltkonfigurationen gewählt.

Darüber hinaus ist an der Welle 140 eine Druckfeder (in der Zeichnung nicht dargestellt) angeordnet, die die Welle 140 in Richtung in das Gehäuseinnere kraftbeaufschlagt. Auf diese Weise können die drehbeweglichen Kontakte 175, 176 stets mit den feststehenden elektrischen Kontakten 155, 160, 165, 170 in elektrischen Kontakt gehalten werden.

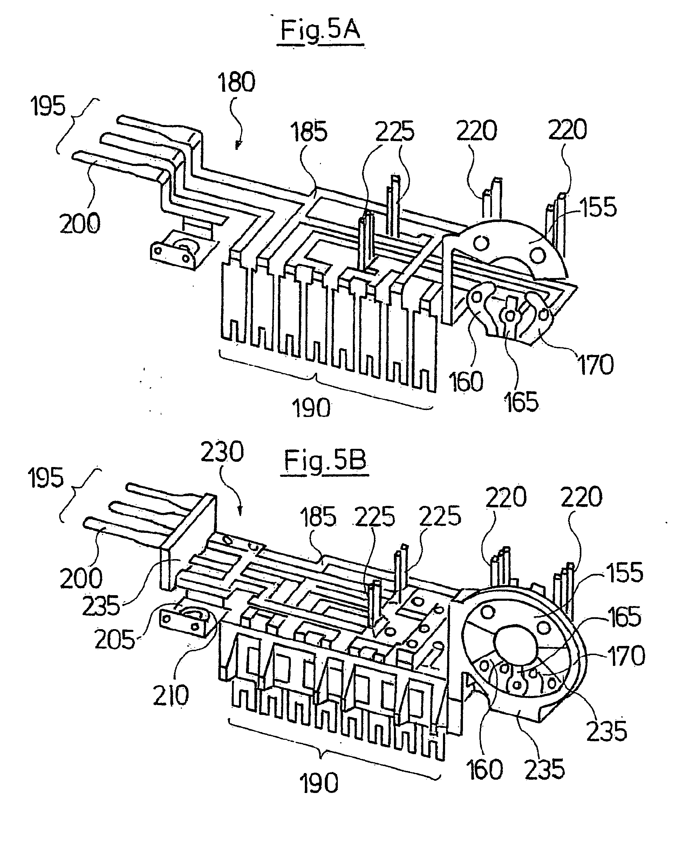

Die feststehenden elektrischen Schaltkontakte 155, 160, 165, 170 des Drehschalters 110 sind in das Bodenteil 100 des Gehäuses 65 eingegossen. Die Schaltkontakte 155, 160, 165,170 sind dabei Teil eines in Fig. 5A dargestellten Leiterbahnsystems 180. Dieses Leiterbahnsystem 180 besteht im Wesentlichen aus einem dünn und flächig ausgebildeten System von Leiterbahnen 185. Die feststehenden elektrischen Schaltkontakte 155, 160, 165, 170 des Drehschalters 110 stellen dabei die Endbereiche einzelner Leiterbahnen 185 dar. Die Schaltkontakte 155, 160, 165, 170 sind von den Leiterbahnen 185 um 90° derart abgewinkelt, dass sie in einer gemeinsamen Ebene liegen und gemeinsam einen Teil der Stirnseite 141 der Aufnahme 117 bilden. Das Leiterbahnsystem 180 weist weitere feststehende elektrische Kontakte auf, die als Endbereiche einzelner Leiterbahnen 185 ausgestaltet sind. So bildet eine Gruppe 190 von elektrischen Kontakten den elektrischen Teil des elektrischen Steckkontaktbereiches 55 zum Anschluss des Klemmenkastens 45 an den Elektromotor 32. Eine weitere Gruppe 195 von elektrischen Kontakten bildet den elektrischen Teil des elektrischen Steckkontaktbereiches 60 zum Anschluss des Klemmenkastens 45 an eine Spannungsquelle.

Ein elektrischer Steckkontakt der Gruppe von elektrischen Steckkontakten 195 bildet dabei ein Erdungselement 200 zur Erdung des angeschlossenen Elektromotors 32. Dazu ist das Erdungselement 200 über das Leiterbahnsystem 180 mit einer außerhalb des motorseitigen Bodenteils 100 des Gehäuses 65 des Klemmenkastens 45 gelegenen Kontaktfläche 205 verbunden. Im montierten Zustand des Klemmenkastens 45 kommt die Kontaktfläche 205 mit dem Gehäuse des Elektromotors 32 durch direkte Anlage in elektrischen Kontakt. Zur Unterstützung des elektrischen Kontakts ist die Kontaktfläche 205 mit einer Durchführung 210 versehen, durch die eine Schraube (in der Zeichnung nicht dargestellt) zur Befestigung des Klemmenkastens 45 an den Elektromotor 32 geführt wird. Die Schraube drückt dabei die Kontaktfläche 205 nach der Montage des Klemmenkastens 45 an den Elektromotor 32 gegen das Gehäuse des Elektromotors 32.

Die zuvor genannten elektrischen Kontakte 155, 160, 165, 170 bzw. Gruppen von elektrischen Kontakten 190, 195 sind jeweils an den äußeren Bereichen des dünn und flächig ausgestalteten Leiterbahnsystems 180 angeordnet. Das Leiterbahnsystem 180 ist in eine Wandung bzw. Bodenfläche 215 des Bodenteils 100 des Gehäuses 65 des Klemmenkastens 45 eingegossen. Die Gruppe 190 der von den einzelnen Leiterbahnen 185 abgewinkelten elektrischen Kontakte ragt dabei aus dem motorseitigen Bodenteil 100 des Gehäuses 65 des Klemmenkastens 45 nach unten, also aus der Unterseite 75 des Gehäuses 65 des Klemmenkastens 45 heraus. Die Gruppe 195 elektrischer Kontakte ragt seitlich aus der dem Drehschalter 110 fernen Schmalseite 80 des Bodenteils 100 des Gehäuses 65 heraus. Die elektrischen Kontakte 155, 160, 165, 170 hingegen bilden die Stirnseite 141 der Aufnahme 117 und liegen somit in der Oberfläche des Bodenteils 100 des Gehäuses 65 des Klemmenkastens 45. Daneben weist das Leiterbahnsystem 180 Paare 220, 225 von federnden Klemmzungen auf, welche sich senkrecht zu den Leiterbahnen 185 orientiert nach oben, d.h. senkrecht zur Bodenfläche 215 des Bodenteils 100 des Gehäuses 65 orientiert und in das innere des Klemmenkastens 45 gerichtet, vom Leiterbahnsystem 180 fortstrecken. Auch die Paare 220, 225 federnder Klemmzungen stellen dabei elektrische Kontakte dar, die jedoch im Gegensatz zu den oben erwähnten Kontakten im Innenbereich des Klemmenkastens 45 gelegen sind. Näheres hierzu wird weiter nachfolgend ausgeführt.

Wie in Fig. 5B gezeigt, ist das Leiterbahnsystem 180 nicht unmittelbar in die Bodenfläche 215 eingegossen. Vielmehr sind die einzelnen Leiterbahnen 185 zunächst miteinander zu einem einstückig bzw. einteilig handhabbaren Modul 230 vorvergossen. Dazu sind die Leiterbahnen 185 teilweise mit Kunststoff 235 umspritzt. Auf diese Weise kann das Modul 230 deutlich einfacher in die Bodenfläche 215 eingegossen werden, als dies mit einer Ansammlung einzelner Leiterbahnen 185, die dazu einzeln in einem Werkzeug zu positionieren wären, möglich wäre.

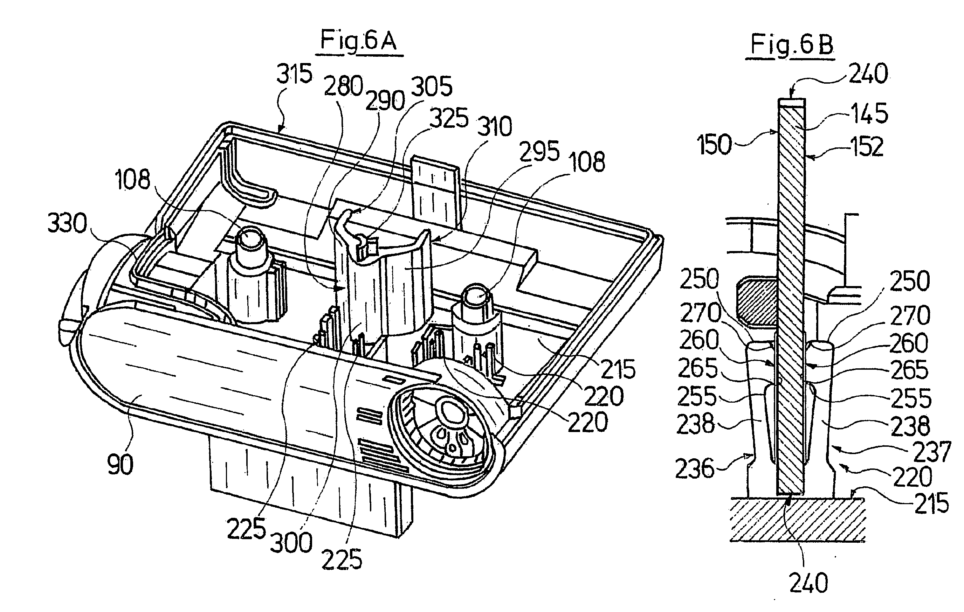

Die Ausgestaltung der Paare 220, 225 von federnden Klemmzungen kann Fig. 6A und Fig. 6B entnommen werden. In Fig. 6A ist das Bodenteil 100 des Gehäuses 65 des Klemmenkastens 45 ohne eingesetzte Leiterplatte 145 gezeigt. Die Paare federnder Klemmzungen 220, 225 erstrecken sich in das Innere des Gehäuses 65 des Klemmenkastens 45 und senkrecht zur Bodenfläche 215 von dieser weg. Die Paare 220 federnder Klemmzungen dienen dabei zur Klemmung der Leiterplatte 145 und weisen jeweils zwei einander gegenüberliegende Klemmzungen 236. 237 auf. Zwei Paare 220 von Klemmzungen sind entlang einer Ebene positioniert, die parallel zur Vorderseite 90 des Klemmenkastens 45 verläuft. Auf diese Weise lässt sich die Leiterplatte 145 senkrecht zur Bodenfläche 215 und parallel zur Vorderseite 90 des Klemmenkastens 45 klemmen.

Die Klemmung der Leiterplatte 145 durch die Klemmzungenpaare 220 ist in Fig. 6B in einer Schnittansicht gezeigt. Die Leiterplatte 145 befindet dabei in ihrer Klemmposition, in welcher sie mit ihren Flachseiten 150, 152 senkrecht zur Bodenfläche 215 orientiert ist. Dabei ist sie mit der Richtung ihrer längsten Ausdehnung parallel zur Vorderseite 90 und zur Bodenfläche 215 des Gehäuses 65 des Klemmenkastens orientiert. In der in Fig. 6B dargestellten Schnittansicht ist die Vorderseite 90 des Klemmenkastens 45 dabei links von der Leiterplatte 145 gelegen. Die Schmalseiten 240 der Leiterplatte sind parallel zur Bodenfläche 215 des Klemmenkastens 45 orientiert. Die Leiterplatte 145 ist an den beiden Flachseiten 150, 152 durch Paare 220 von Klemmzungen geklemmt, von denen ein Paar 220 in der Schnittansicht dargestellt ist. Die einander gegenüberliegenden Klemmzungen 236, 237 des Klemmzungenpaares 220 sind bei eingesetzter Leiterplatte 145 beiderseits an den einander abgewandten Flachseiten 150, 152 der Leiterplatte 145 gelegen. Sie sind als sich im Wesentlichen senkrecht von der Bodenfläche 215 forterstreckende federnde Laschen 238 ausgebildet und weisen an ihren der Bodenfläche 215 fernen Enden 250 jeweils einen zu den Flachseiten 150, 152 der Leiterplatte 145 weisenden Vorsprung 255 auf, dessen der Leiterplatte 145 zugewandten Seite eine elektrische Kontaktfläche 260 bildet. Die Kontaktflächen 260 geraten bei Klemmung der Leiterplatte 145 mit korrespondierenden Kontaktflächen 265 der Leiterplatte 145 flächig in elektrischen Kontakt. Die elektrischen Kontaktflächen 265 sind als Teil der auf der Leiterplatte 145 befindlichen Leiterbahnen ausgebildet und befinden sich nahe der unteren Schmalseite 240 und an den Flachseiten 150, 152 der Leiterplatte 145.

Die Kontaktflächen 260 der Klemmzungen 236, 237 sind gegen die Kontaktflächen 265 der Leiterplatte 145 kraftbeaufschlagt, womit gleichzeitig ein sicherer Halt und eine zuverlässige elektrische Kontaktierung der Leiterplatte 145 gewährleistet ist. Die Kraftbeaufschlagung der Kontaktflächen 260 in Richtung auf die Leiterplatte 145 ist dabei durch die Rückstellkraft der federnden Laschen 238 der Klemmzungen 236,237 bedingt, welche beim Einsetzen der Leiterplatte 145 senkrecht zu den Flachseiten 150, 152 der Leiterplatte 145 aus ihrer Ruhelage ausgelenkt werden.

Das Einsetzen der Leiterplatte 145 zwischen die Klemmzungen 236, 237 wird derart durchgeführt, dass die Leiterplatte 145 senkrecht auf die Bodenfläche 215 zu bewegt wird. Bevor die Leiterplatte 145 mit den Klemmzungen 236, 237 in Berührung kommt, befinden sich die Klemmzungen 236, 237 in ihrer Ruhelage. In der Ruhelage ist der Abstand der einander zugewandten elektrischen Kontaktflächen 260 der Klemmzungen 236, 237 voneinander geringer als die Dicke der Leiterplatte 145, also die Ausdehnung der Leiterplatte 145 senkrecht zu ihren Flachseiten 150, 152. Wenn die untere Schmalseite 240 der Leiterplatte 145 die von der Bodenfläche 215 entfernten Enden 250 der Klemmzungen 236, 237 erreicht, werden bei der weiteren Bewegung der Leiterplatte 145 auf die Bodenfläche 215 zu infolge konvexer Rundungen 270 der Vorsprünge 255 die Kontaktflächen 260 des Klemmzungenpaares 220 auseinander gedrückt. Dabei werden die Klemmzungen 236, 237 an ihren von der Bodenfläche 215 entfernten Enden 250 senkrecht zu den Kontaktflächen 260 bzw. senkrecht zu den Flachseiten 150, 152 der Leiterplatte 145 ausgelenkt. Die federnden Laschen 238 der Klemmzungen 236, 237 werden dabei an ihren von der Bodenfläche 215 fernen Abschnitten auseinander gebogen. Aus dieser Biegung der Laschen 238 resultiert eine Rückstellkraft der Laschen 238 zurück in ihre Ruhelage. Daher werden die Kontaktflächen 260 über die Laschen 238 der Klemmzungen 236, 237 in Richtung auf die Leiterplatte 145 kraftbeaufschlagt. Die Leiterplatte 145 gelangt somit mit ihren Flachseiten 150, 152 mit den Kontaktflächen 260 des Klemmzungenpaares 220 in Kontakt. Die Kontaktflächen 260 des Klemmzungenpaares 220 schleifen bei der weiteren Bewegung der Leiterplatte 145 auf die Bodenfläche 215 zu über die Flachseiten 150, 152 der Leiterplatte 145, bis sie mit den Kontaktflächen 265 der Leiterplatte 145 in Kontakt treten. Die Kontaktflächen 265 der Leiterplatte 145 liegen bündig in zumindest einer Flachseite 150, 152 der Leiterplatte 145. Alternativ zu dieser gezeigten Ausführungsform können die Kontaktflächen 265 der Leiterplatte 145 auch als Vertiefungen in zumindest einer der Flachseiten 150, 152 ausgebildet sein, sodass das Paar von Klemmzungen 220 und die Leiterplatte 145 über eine Rostverbindung lösbar und gleichzeitig fest miteinander verbunden sind.

Das Bodenteil 100 weist darüber hinaus eine Haltevorrichtung in Form eines Klemmhalters 280 zur Klemmung eines Kondensators 285 auf. In Fig. 6A ist das Bodenteil 100 ohne den eingelegten Kondensator 285 dargestellt, in Fig. 3A ist der Kondensator 285 mit dem Klemmhalter 280 geklemmt. Der Klemmhalter 280 ist dazu als ein Paar von zwei Klemmschenkeln 290, 295 ausgebildet, die jeweils als Wandung senkrecht zur Bodenfläche 215 orientiert nach oben von der Bodenfläche 215 wegstehen. Die beiden Klemmschenkel 290, 295 treffen sich in einer zur Vorderseite 90 des Klemmkastens 45 gewandten gemeinsamen Scheitelkante 300. Die von der Vorderseite 90 abgewandten Kanten der Klemmschenkel 290, 295 bilden dabei zwei senkrecht zur Bodenfläche 215 orientierte Klemmflächen 305, 310, die den Kondensator 285 gegen die Rückwand 315 des Bodenteils 100 klemmen, sodass die Längsachse 320 des Kondensators 285 parallel zur Rückseite 315 des Bodenteils 100 orientiert ist.

Die beiden Wandungen 290, 295 bestehen dabei aus einem elastischen Kunststoff. Zur Klemmung des Kondensators 285 ist der Abstand zwischen den Klemmflächen 305, 310 des Klemmhalters 280 und der Rückseite 315 des Bodenteils 100 etwas geringer als der Durchmesser des Kondensators 285 gewählt. So werden die Klemmflächen 305, 310 vom Kondensator 285 elastisch ausgelenkt. Aufgrund seiner Elastizität übt der Kunststoff der Klemmflächen 305, 310 auf den Kondensator 285 eine Rückstellkraft aus, welche den Kondensator 285 in seiner Klemmposition in Richtung auf die Rückseite 315 des Bodentells 100 kraftbeaufschlagt.

Die beiden Wandungen 290, 295 umschließen an ihrer gemeinsamen Scheitelkante 300 eine Befestigungsstange 325, welche sich mit sternförmigen Profil senkrecht von der Bodenfläche 215 fortstreckt. Auf diese Weise sind die beiden Wandungen 290, 295 drehfest an der Bodenfläche 215 und somit drehfest an dem Bodenteil 100 des Gehäuses 65 befestigt.

Der Kondensator 285 ist über elektrische Leitungskabel 327 mit der Leiterplatte 145 verbunden. Die Leitungskabel 327 sind am Bodenteil 100 des Gehäuses 65 des Klemmenkastens 45 über die Paare 225 von Klemmzungen geklemmt. Die Klemmung der Leitungskabel 327 in den Paaren 225 von Klemmzungen erfolgt dabei in ähnlicher Weise wie die zuvor beschriebene Klemmung der Leiterplatte 145 in den Paaren 220 von Klemmzungen. Die elektrischen Leiter der Kabel werden zwischen den Klemmzungen 225 geklemmt, welche zusätzlich schneidend ausgebildet sein können, um in den Leiter formschlüssig einzugreifen.

Zur wasserdichten Verbindung des Bodenteils 100 mit dem Deckel 105 ist entlang des Fügebereichs des Bodenteils 100 eine Dichtung 330 aus einem elastischen Kunststoff angespritzt. Diese Dichtung 330 und die Wandungen 290, 295 des Klemmhalters 280 für den Kondensator 285 sind dabei gemeinsam aus demselben elastischen Kunststoff als zweite Komponente im Zweikomponenten-Spritzgießen gefertigt, wobei das Gehäuse 65 aus der ersten Komponente gebildet ist.

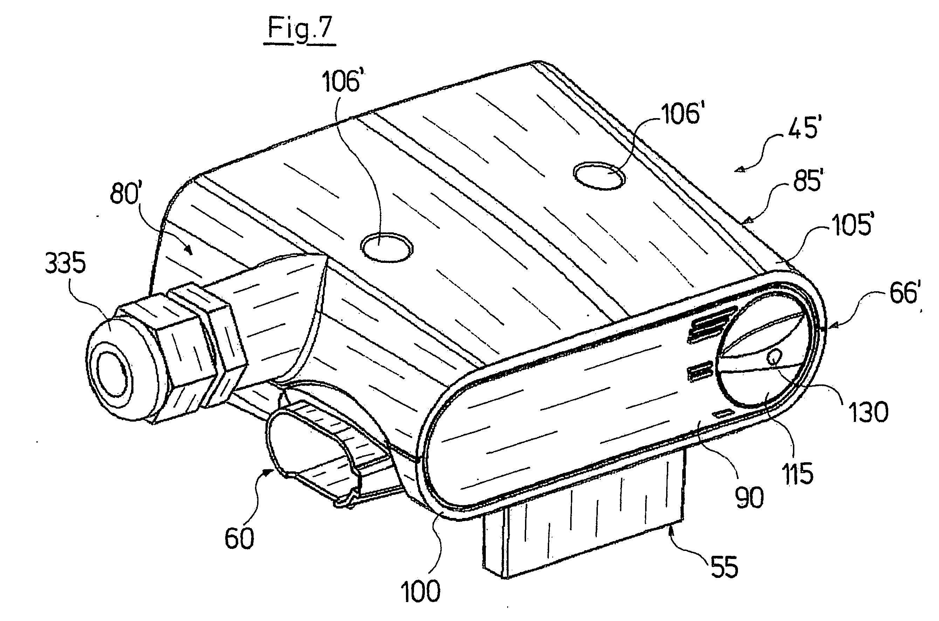

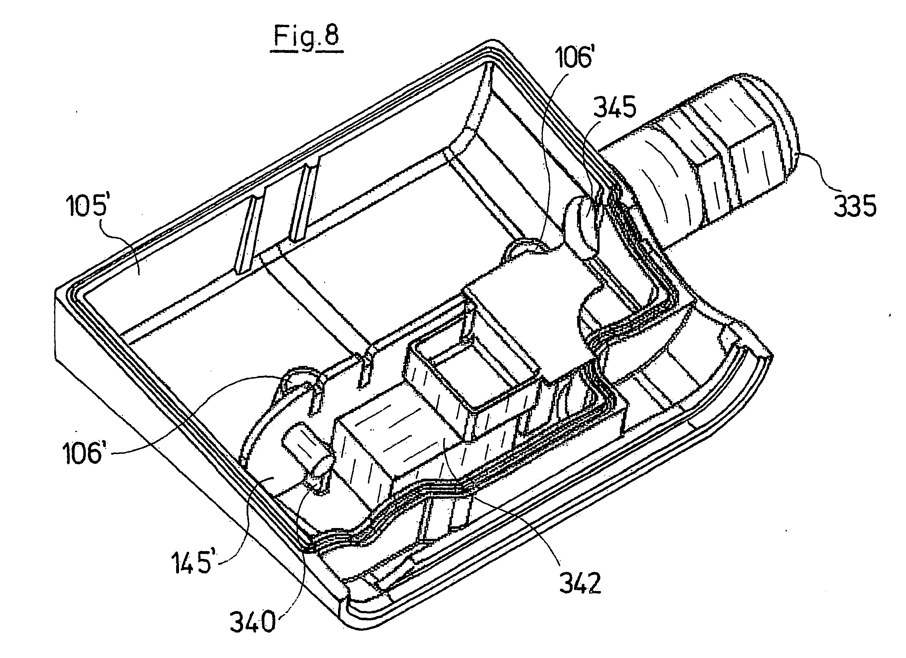

Der zuvor beschriebene Klemmenkasten 45 ist Teil eines Klemmenkastensystems, welcher neben dem zuvor beschriebenen Klemmenkasten 45 einen zweiten Deckel 105' aufweist, der eine zusätzliche Kabeldurchführung 335 umfasst (Fig. 7 und 8). Wie in Fig. 7 dargestellt, lässt sich dieser zusätzliche zweite Deckel 105' mit dem Bodenteil 100 zu einem vom Gehäuse 65 verschiedenen Gehäuse 65' eines erweiterten Klemmenkastens 45' zusammenfügen. Zusätzlich zu der Kabeldurchführung 335 weist der zweite Deckel 105' eine eigene, zweite Leiterplatte 145' auf, die an die Stelle der ersten Leiterplatte 145 tritt, wenn die Deckel 105, 105' ausgetauscht werden. Dazu sind sowohl die Leiterplatte 145 in dem Deckel 105 bzw. die Leiterplatte 145' in dem zweiten Deckel 105' wie in Fig. 8 dargestellt über Befestigungsmittel 340 fest angebracht. Indem ein Deckel 105 bzw. 105' auf dos Bodenteil 100 gesetzt wird, gelangt gleichzeitig die Leiterplatte 145 bzw. 145' mit den Paaren 220 von Klemmzungen 236, 237 des Bodenteils 100 wie zuvor beschrieben in Kontakt. Entsprechend wird durch einen Wechsel des Deckels 105 bzw. 105' die Leiterplatte 145 bzw. 145' ausgewechselt. Dabei weist zudem die zweite Leiterplatte 145' einen gegenüber der ersten Leiterplatte 145 geänderten Funktionsumfang auf. So ist auf der zweiten Leiterplatte 145' ein steuerbarer Schalter, d.h. ein Relais 342, angebracht, dessen Steuerkontakt mit dem elektrischen Steckkontaktbereich zum Anschluss des Elektromotors 55 verbunden ist und dessen Schaltkontakte mit Kabeln (in der Zeichnung nicht dargestellt) verbunden sind, die durch die Durchführung 335 sowie eine Durchführung 345 des zweiten Deckels 105' geführt sind. Dabei schaltet der steuerbare Schalter auf der zweiten Leiterplatte 145' über die durch die Durchführungen 335, 345 geführten Kabel, z.B. wenn der Elektromotor 32 keinen elektrischen Strom erhält, ein zweites Pumpenaggregat (in der Zeichnung nicht dargestellt).

### Bezugszeichenllste

- 5: - Pumpenaggregat
- 10: - Kreiselpumpe
- 32: - Elektromotor
- 40: - Stator
- 45, 45': - Klemmenkasten
- 50: - Elektrische Leitung
- 55: - Elektrischer Steckkontaktbereich
- 60: - Elektrischer Steckkontaktbereich
- 65, 65': - Gehäuse des Klemmenkastens 45, 45'
- 70: - Oberseite
- 75: - Unterseite
- 80: - Kurze Schmalseite
- 85: - Kurze Schmalseite
- 90: - Vorderseite
- 95: - Rückseite
- 100: - Bodenteil
- 105.105': - Deckel
- 106: - Durchführungen
- 108: - Löcher
- 110: - Drehschalter
- 114: - Stirnfläche des Drehkörpers 115
- 115: - Drehkörper
- 116: - Mantelfläche des Drehkörpers 115
- 117: - Aufnahme
- 120: - Markierungen
- 125: - Markierungen
- 130: - Leuchtanzeige
- 135: - Leuchtdiode
- 140: - Welle
- 141: Stirnseite der Aufnahme 117
- 142: - Durchführung für die Welle 140
- 145: - Leiterplatte
- 150: - Vorderseite der Leiterplatte 145
- 152: - Rückwärtige Flachseite der Leiterplatte 145
- 155: - Feststehender elektrischer Schaltkontakt
- 160, 165, 170: - Feststehender elektrischer Schaltkontakt
- 172: - Anlagefläche
- 175: - Beweglicher elektrischer Schaltkontakt
- 176: - Beweglicher elektrischer Schaltkontakt
- 178: - Leiterbahn
- 180: - Leiterbahnsystem
- 185: - Einzelne Leiterbahnen
- 190: - Gruppe von elektrischen Kontakten
- 195: - Gruppe von elektrischen Kontakten
- 200: - Erdungselement
- 205: - Kontaktfläche
- 210: - Durchführung
- 215: - Bodenfläche
- 220: - Paar federnder Klemmzungen zur Klemmung der Leiterplatte 145
- 225: - Paare federnder Klemmzungen
- 230: - Modul
- 235: - Kunststoff
- 236: - Klemmzunge
- 237: - Klemmzunge
- 238: - federnde Lasche
- 240: - Schmalseite der Leiterplatte 145
- 250: - Ende der Klemmzungen
- 255: - Vorsprung
- 260: - Kontaktflächen
- 265: - Kontaktflächen
- 270: - Rundung
- 280: - Klemmhalter
- 285: - Kondensator
- 290: - Wandung
- 295: - Wandung
- 300: - Gemeinsame Scheitelkante
- 305: - Klemmfläche
- 310: - Klemmfläche
- 315: - Rückwand des Bodenteils 100
- 320: - Längsachse des Kondensators 285
- 325: - Haltestange
- 327: - Leitungskabel
- 330: - Dichtung
- 335.: - Kabeldurchführung
- 340: - Befestigungsmittel
- 342: - Relais
- 345: - Kabeldurchführung

## Patentansprüche

1. Klemmenkasten zum elektrischen Anschluss an einen Elektromotor, insbesondere einer Umwälzpumpe, umfassend zumindest einen als Kunststoffgussteil ausgebildeten Gehäuseteil (100) und einem Bedienschalter (110), wobei der Bedienschalter (110) an dem Gehäuseteil (100) angeordnet ist, zumindest ein feststehender elektrischer Schaltkontakt (155, 160, 165, 170) des Bedienschalters (110) in den Gehäuseteil (100) eingegossen ist und Teil eines Leiterbahnsystems bildet, und der Bedienschalter (110) einen beweglichen Teil (115) aufweist, welcher einen beweglichen Schaltkontakt (175, 176) des Bedienschalters (110) umfasst, wobei der bewegliche Schaltkontakt (175, 176) des Bedienschalters (110) mit dem feststehenden elektrischen Schaltkontakt (155, 160, 165, 170) in elektrisch leitende Verbindung treten kann.

2. Klemmenkasten nach Anspruch 1, **dadurch gekennzeichnet, dass** der Bedienschalter (110) mehrere feststehenden Schaltkontakte (155, 160, 165, 170) aufweist.

3. Klemmenkasten nach Anspruch 1 oder 2, **dadurch gekennzeichnet, dass** am Bedienschalter (110) ein Federelement angeordnet ist, welches den beweglichen Teil (115) des Bedienschalters (110) in Richtung auf den Gehäuseteil (100) kraftbeaufschlagt.

4. Klemmenkasten nach einem der vorangehenden Ansprüche, **dadurch gekennzeichnet, dass** der bewegliche Teil (115) des Bedienschalters (110) über eine Rastverbindung beweglich mit dem Gehäuseteil (100) verbunden ist.

5. Klemmenkasten nach einem der vorhergehenden Ansprüche, **dadurch gekennzeichnet, dass** der Bedienschalter (110) ein Drehschalter (110) ist.

6. Klemmenkasten nach einem der vorhergehenden Ansprüche, **dadurch gekennzeichnet, dass** der Bedienschalter (110) ein Drehzahlwahlschalter des Elektromotors (32) ist.

7. Klemmenkasten nach einem der vorhergehenden Ansprüche, **dadurch gekennzeichnet, dass** der Bedienschalter (110) ein Anzeigeelement (130) aufweist.

8. Klemmenkasten nach Anspruch 7, **dadurch gekennzeichnet, dass** das Anzeigeelement (130) eine Leuchtanzeige (130) ist und dass der Klemmenkasten (45) ein Leuchtmittel (135) und einen Lichtleiter (140) aufweist, mittels welchem das Leuchtmittel (135) und die Leuchtanzeige (130) lichtleitend miteinander verbunden sind.

9. Klemmenkasten nach Anspruch 8, **dadurch gekennzeichnet, dass** ein Teil des Bedienschalters (110), insbesondere die Welle (140) eines Drehschalters (110), zumindest einen Teil des Lichtleiters (140) bildet.

10. Klemmenkasten nach einem der vorhergehenden Ansprüche, **dadurch gekennzeichnet, dass** das Leiterbahnsystem (180) in den Gehäuseteil (100) eingegossen ist.

11. Klemmenkasten nach einem der vorhergehenden Ansprüche, **dadurch gekennzeichnet, dass** das Leiterbahnsystem (180) zumindest eine der nachfolgenden Komponenten aufweist:
einen elektrischen Steckkontaktbereich zum Anschluss des Klemmenkastens an den Elektromotor (190),
einen elektrischen Steckkontaktbereich zum Anschluss des Klemmenkastens an eine Spannungsquelle (195),
einen elektrischen Kontakt zum Anschluss eines Kondensators (285) des Klemmenkastens (45),
zumindest einen elektrischen Kontakt (220) zum Anschluss einer Leiterplatte (145) des Klemmenkastens (45),
ein Erdungselement (200).

12. Klemmenkasten nach Anspruch 10 oder 11, **dadurch gekennzeichnet, dass** zumindest einzelne Leiterbahnen (185) des Leiterbahnsystems (180) vor dem Eingießen in den Gehäuseteil (100) isolierend miteinander verbunden sind.

13. Pumpenaggregat, insbesondere ein Umwälzpumpenaggregat, **dadurch gekennzeichnet, dass** es einen Klemmenkasten (45) nach einem der vorhergehenden Ansprüche aufweist.

## Claims

1. A terminal box for the electrical connection to an electric motor, in particular of a circulation pump, comprising at least one housing part (100) designed as a plastic moulded part, and an operating switch (110), wherein the operating switch (110) is arranged on the housing part (100), at least one stationary electrical switch contact (155, 160, 165, 170) of the operating switch (110) is moulded into the housing part (100) and forms part of the strip conductor system, and operating switch (110) comprises a movable part (115) which comprises a movable switch contact (175, 176) of the operating switch (110), wherein the movable switch contact (175, 176) of the operating switch (110) can come into electrically conductive connection with the stationary electrical switch contact (155, 160, 165, 170).

2. A terminal box according to claim 1, **characterised in that** the operating switch (110) comprises several stationary switch contacts (155, 160, 165, 170).

3. A terminal box according to claim 1 or 2, **characterised in that** a spring element which impinges the movable part (115) of the operating switch (110) with force in the direction of the housing part (100), is arranged on the operating switch (110).

4. A terminal box according to one of the preceding claims, **characterised in that** the movable part (115) of the operating switch (110) is movably connected to the housing part (100) via a locking connection.

5. A terminal box according to one of the preceding claims, **characterised in that** the operating switch (110) is a rotary switch (110).

6. A terminal box according to one of the preceding claims, **characterised in that** the operating switch (110) is a rotary speed selection switch of the electric motor (32).

7. A terminal box according to one of the preceding claims, **characterised in that** the operating switch (110) comprises a display element (130).

8. A terminal box according to claim 7, **characterised in that** the display element (130) is a light display (130) and that the terminal box (45) comprises a light means (135) and a light guide (140), by way of which the light means (135) and the light display (130) are connected to one another in a light guiding manner.

9. A terminal box according to claims 8, **characterised in that** a part of the operating switch (110), in particular the shaft (140) of a rotary switch (110), forms at least part of the light guide (140).

10. A terminal box according to one of the preceding claims, **characterised in that** the strip conductor system (180) is moulded into the housing part (100).

11. A terminal box according to one of the preceding claims, **characterised in that** the strip conductor system (180) comprises at least one of the following components:
an electrical plug contact region for the connection of the terminal box to the electric motor (190),
an electrical plug contact region for the connection of the terminal box to a voltage source (195),
an electrical contact for the connection of a capacitor (285) of the terminal box (45),
at least one electrical contact (220) for the connection of a circuit board (145) of the terminal box (45),
an earthing element (200).

12. A terminal box according to claims 10 or 11, **characterised in that** at least individual strip conductors (185) of the strip conductor system (180) are connected to one another in an insulating manner, before the moulding into the housing part (100).

13. A pump assembly, in particular a circulation pump assembly, **characterised in that** it comprises a terminal box (45) according to one of the preceding claims.

## Revendications

1. Boîte à bornes pour la connexion électrique à un moteur électrique, en particulier d'une pompe de circulation, comprenant au moins une partie boîtier (100) constituée par une pièce moulée en matière plastique et un commutateur de commande (110), le commutateur de commande (110) étant disposé au niveau de la partie boîtier (100), au moins un contact de commande électrique fixe (155, 160, 165, 170) du commutateur de commande (110) étant coulé dans la partie boîtier (100) et formant une partie d'un système de circuit conducteur, et le commutateur de commande (110) présentant une partie mobile (115) qui comprend un contact de commande mobile (175, 176) du commutateur de commande (110), le contact de commande mobile (175, 176) du commutateur de commande (110) pouvant entrer en liaison électriquement conductrice avec le contact de commande électrique fixe (155, 160, 165, 170).

2. Boîte à bornes selon la revendication 1, **caractérisée en ce que** le commutateur de commande (110) présente plusieurs contacts de commande fixes (155, 160, 175, 170).

3. Boîte à bornes selon la revendication 1 ou 2, **caractérisée en ce qu'**est disposé sur le commutateur de commande (110) un élément élastique qui applique une force à la partie mobile (115) du commutateur de commande (110) en direction de la partie boîtier (100).

4. Boîte à bornes selon l'une des revendications précédentes, **caractérisée en ce que** la partie mobile (115) du commutateur de commande (110) est reliée à la partie boîtier (100) de façon mobile par une liaison à encliquetage.

5. Boîte à bornes selon l'une des revendications précédentes, **caractérisée en ce que** le commutateur de commande (110) est un commutateur rotatif (110).

6. Boîte à bornes selon l'une des revendications précédentes, **caractérisée en ce que** le commutateur de commande (110) est un commutateur-sélecteur de vitesse du moteur électrique (32).

7. Boîte à bornes selon l'une des revendications précédentes, **caractérisée en ce que** le commutateur de commande (110) présente un élément indicateur (130).

8. Boîte à bornes selon la revendication 7, **caractérisée en ce que** l'élément indicateur (130) est un indicateur lumineux (130) et **en ce que** la boîte à bornes (45) présente une lampe (135) et une fibre optique (140) au moyen de laquelle la lampe (135) et l'indicateur lumineux (130) sont reliés l'un à l'autre d'une façon qui conduit la lumière.

9. Boîte à bornes selon la revendication 8, **caractérisée en ce qu'**une partie du commutateur de commande (110), en particulier l'axe (140) d'un commutateur rotatif (110), forme au moins une partie de la fibre optique (140).

10. Boîte à bornes selon l'une des revendications précédentes, **caractérisée en ce que** le système de circuit conducteur (180) est coulé dans la partie boîtier (100).

11. Boîte à bornes selon l'une des revendications précédentes, **caractérisée en ce que** le système de circuit conducteur (180) présente au moins l'un des composants suivants :
une région électrique de contacts à fiches pour la connexion de la boîte à bornes au moteur électrique (190),
une région électrique de contacts à fiches pour la connexion de la boîte à bornes à une source de tension (195),
un contact électrique pour la connexion d'un condensateur (285) de la boîte à bornes (45),
au moins un contact électrique (220) pour la connexion d'une carte de circuits imprimés (145) de la boîte à bornes (45),
un élément de mise à la terre (200).

12. Boîte à bornes selon la revendication 10 ou 11, **caractérisée en ce qu'**au moins certaines pistes conductrices (185) du système de circuit conducteur (180) sont reliées entre elles de façon isolante avant leur coulée dans la partie boîtier (100).

13. Groupe motopompe, en particulier groupe motopompe de circulation, **caractérisé en ce qu'**il présente une boîte à bornes (45) selon l'une des revendications précédentes.
